# EUROPÄISCHE PATENTSCHRIFT

(11) **EP 0 778 853 B1**
(45) Veröffentlichungstag und Bekanntmachung des Hinweises auf die Patenterteilung: **04.08.1999**
(21) Anmeldenummer: 95921796.9
(22) Anmeldetag: 31.05.1995
(51) Int. Cl.: C08F 212/06, C08F 212/34, C08L 101/00

(54) **THERMOPLASTISCHE FORMMASSE**
THERMOPLASTIC MOULDING MATERIAL
MATIERE MOULABLE THERMOPLASTIQUE

(30) Priorität: 16.06.1994 DE 4420917; 13.10.1994 DE 4436499
(43) Veröffentlichungstag der Anmeldung: 18.06.1997
(73) Patentinhaber: BASF AKTIENGESELLSCHAFT, 67056 Ludwigshafen (DE)
(72) Erfinder: KNOLL, Konrad, D-67069 Ludwigshafen (DE); GAUSEPOHL, Hermann, D-67112 Mutterstadt (DE)
(86) Internationale Anmeldenummer: EP9502072
(87) Internationale Veröffentlichungsnummer: WO9534586

(56) Entgegenhaltungen:
- JOURNAL OF POLYMER SCIENCE, POLYMER LETTERS EDITION, Bd. 8, 1970 NEW YORK. ; US, Seiten 499-503, W.J. TREPKA 'SYNTHESYS AND PROPERTIES OF BLOCK POLYMERS OF 1.1-DIPHENYLETHYLENE/STYRENE AND BUTADIENE' in der Anmeldung erwähnt
- BULLETIN OF THE CHEMICAL SOCIETY OF JAPAN, Bd. 40, November 1967 TOKYO. ; JP, Seiten 2659-2663, H. YUKI ET AL 'ANIONIC COPOLYMERISATION OF STYRENE AND 1.1-DIPHENYLETHYLENE' in der Anmeldung erwähnt
- DATABASE WPI Section Ch, Week 9120 Derwent Publications Ltd., London, GB; Class A13, AN 91-143958 & JP,A,03 079 613 (ASAHI CHEMICAL IND) , 4.April 1991

## Beschreibung

Die vorliegende Erfindung betrifft thermoplastische Formmassen, enthaltend als wesentliche Komponenten,
A) 10 bis 100 Gew.% Statistische Copolymerisate aus den Monomeren der allgemeinen Formeln I und II 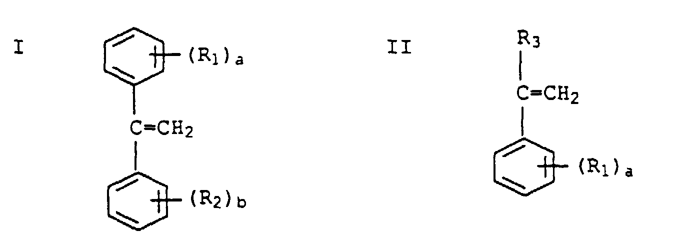 mit
   R₁ = H oder Alkylrest mit 1-22 C-Atomen
   R₂ = H oder Alkylrest mit 1-22 C-Atomen
   R₃ = H oder Alkylrest mit 1-4 C-Atomen
   a = 0, 1, 2, 3, 4 oder 5
   b = 0, 1, 2, 3, 4 oder 5
B) 0 bis 3000 ppm, bezogen auf das Gewicht der Komponente A, Verbindungen der allgemeinen Formel I,
C) 0 bis 500 ppm, bezogen auf das Gewicht der Komponente A, Verbindungen der allgemeinen Formel II,
D) 0 bis 90 Gew.%, bezogen auf das Gesamtgewicht der Formmasse, weiteren von A) verschiedenen Polymeren, und
E) 0 bis 50 Gew.%, bezogen auf das Gesamtgewicht der Formmasse, an weiteren Zusatzstoffen und Verarbeitungshilfsmitteln.

Thermoplastische Formmassen sind bei Raumtemperatur hart und formfest. Der Anwendungsbereich der Thermoplaste wird bei höheren Temperaturen aber durch die Glasübergangstemperatur oder durch den Schmelzpunkt, sofern es sich um teilkristalline Thermoplaste handelt, begrenzt. Das gilt auch für ataktisches Polystyrol, dessen Glasübergangstemperatur 101°C beträgt und das aufgrund der unregelmäßigen Anordnung der Phenylringe nicht kristallisiert. In neuerer Zeit ist es gelungen, durch sogenannte Metallocen-Katalyse ein syndiotaktisches Polystyrol herzustellen, dessen kristalline Bereiche einen Schmelzpunkt von 275°C besitzen (z.B. EP-A-210 615, EP-A-535 582, EP-A- 312 976 und EP-A-318 833).

Syndiotaktisches Polystyrol besitzt jedoch verschiedene Nachteile. So ist beispielsweise der Verarbeitungsbereich zur Herstellung von Formteilen relativ klein, da man das Produkt einerseits über den Schmelzpunkt erwärmen muß, es sich aber andererseits oberhalb 310°C bereits zersetzt. Dies hat zur Folge, daß das Produkt bei der Verarbeitung unter Depolymerisation leicht Monostyrol zurückbildet.

Ferner kristallisiert das Produkt in verschiedenen Modifikationen, die die Gebrauchseigenschaften des Formteils signifikant beeinflussen. Schließlich besitzen nur die kristallinen Bereiche den hohen Schmelzpunkt, während die amorphen Bereiche nach wie vor eine Glasstufe von 101°C besitzen.

Die Polymerisation von 1,1-Diphenylethylen mit Styrol ist bekannt und beschrieben im Bulletin Chem. Soc. Jap. Vol. 40, S. 2569 (1967) und im J. Polymer Sci., Part B, Vol. 8, S. 499 (1970). Das in diesen Veröffentlichungen beschriebene Verfahren hat jedoch den Nachteil, daß die Polymerisation extrem langsam abläuft und der Umsatz unvollständig ist, wenn man höhere Erweichungspunkte erhalten möchte.

Das im Copolymer verbleibende Diphenylethylen senkt die Glastemperatur des Polymerisats ab und macht es deshalb für kommerzielle Zwecke wertlos.

Thermoplastische Elastomere mit Copolymerblöcken A auf Basis von 1,1-Diphenylethylen und Styrol und Dienblöcken B werden in der JP-A 03 079 613 beschrieben. Nach den angegebenen Verfahrensbedingungen erfolgt der Einbau von 1,1-Diphenylethylen in den Copolymerblock A nur unvollständig. Das im ersten Verfahrensschritt nicht umgesetzte 1,1-Diphenylethylen wir durch Copolymerisation mit einem konjugierten Dien in den anschließenden Block B eingebaut.

Aufgabe der vorliegenden Erfindung war es deshalb, thermoplastische Formmassen zur Verfügung zu stellen, die die beschriebenen Nachteile nicht aufweisen, eine Glasübergangstemperatur von wenigstens 130°C besitzen und einen Restmonomergehalt von < 4000 ppm aufweisen.

Die Aufgabe wurde durch thermoplastische Formmassen gemäß Anspruch 1 gelöst.

Bevorzugte erfindungsgemäße Formmassen sind den Unteransprüchen zu entnehmen.

Als Komponente A enthalten die erfindungsgemäßen thermoplastischen Formmassen 10 bis 100, vorzugsweise 40 bis 100 und insbesondere 60 bis 100 Gew.%, bezogen auf den Anteil polymerer Kom ponenten, eines Copolymeren mit Einheiten, die sich von den Monomeren I und II ableiten.

Bei den Monomeren der allgemeinen Formel I handelt es sich um 1,1-Diphenylethylen und dessen an den aromatischen Ringen ggf. mit Alkylgruppen mit bis zu 22 C-Atomen substituierten Derivaten. Bevorzugte Alkylgruppen als Substituenten sind Alkylgruppen mit 1 bis 4 C-Atomen wie Methyl-, Ethyl-, i- und n-Propyl und n-, i-oder tert. Butyl, um nur einige zu nennen. Besonders bevorzugt wird jedoch das unsubstituierte 1,1-Diphenylethylen selbst eingesetzt.

Die Monomeren der allgemeinen Formel II sind Styrol und dessen in α-Stellung oder am aromatischen Ring mit Alkylgruppen mit 1 bis 4 C-Atomen substituierte Derivate. Bevorzugte Alkylgruppen sind die vorstehend für Monomere der Formal I als bevorzugt genannten; unsubstituiertes Styrol selbst wird besonders bevorzugt.

Das molare Verhältnis der Einheiten, die sich von Monomeren I ableiten zu Einheiten, die sich von Monomeren II ableiten liegt im allgemeinen im Bereich von 1 : 1 bis 1 : 25, vorzugsweise von 1 : 1,05 bis 1 : 15 und besonders bevorzugt im Bereich von 1 : 1,1 bis 1 : 10. Da die Monomeren der Formel I in der Regel für sich allein nicht polymerisieren, sind Produkte mit molaren Verhältnissen von mehr als 1 : 1 nicht auf einfachem Wege zugänglich.

Nach dem erfindungsgemäßen Verfahren zur Herstellung der Komponente A) der erfindungsgemäßen Formmassen werden Monomere der Formel I, vorgelegt und die Monomeren der Formel II während der Reaktion nach einem Gradientenverfahren derart zudosiert, daß mit zunehmender Reaktionsdauer die zugegebene Menge an Monomeren der Formel II pro Zeiteinheit im wesentlichen entsprechend der noch vorhandenen Menge an Monomeren der Formel I verringert wird. Durch diese Art der Umsetzung wird das Monomerverhältnis während der gesamten Polymerisation annähernd konstant gehalten. Zur Steuerung des Zulaufgradienten kann vorteilhafterweise die Änderung des Brechungsindexes, der eine Funktion des Monomerverhältnisses ist, ausgenutzt werden. Eine weitere Möglichkeit besteht darin, in einer Reihe von Vorversuchen das Monomerverhältnis als Funktion des Umsatzes zu bestimmen und so eine entsprechende Eichkurve zu erhalten.

Die Umsetzung der genannten Monomeren erfolgt vorteilhafterweise in einem inerten Lösungsmittel. Unter "inert" wird dabei verstanden, daß das Lösungsmittel nicht mit dem zur Initiierung der Reaktion üblicherweise verwendeten metallorganischen Initiator reagiert. Generell eignen sich daher sowohl aliphatische als auch aromatische Kohlenwasserstoffe . Geeignete Lösungsmittel sind beispielsweise Cyclohexan, Methylcyclohexan, Benzol, Toluol, Ethylbenzol oder Xylol.

Schließlich können auch Kohlenwasserstoffe verwendet werden, in denen das im Verlauf der Reaktion entstehende Copolymere nicht löslich ist. In diesem Fall kann man anstelle der Lösungspolymerisation eine Fällungspolymerisation oder unter Verwendung eines Dispergierhilfsmittels eine Dispersionspolymerisation durchführen. Als Reaktionsmedium für derartige Verfahrensvarianten eignen sich beispielsweise Butan, Pentan, n-Hexan, Isopentan, Heptan, Oktan und Isooktan.

Die Polymerisation wird im allgemeinen mittels metallorganischer Verbindungen initiiert, d.h. es handelt sich um eine anionische Polymerisation. Bevorzugt werden Verbindungen der Alkalimetalle, insbesondere des Lithiums. Beispiele für Initiatoren sind Methyllithium, Ethyllithium, Propyllithium, n-Butyllithium, sek. Butyllithium und tert. Butyllithium. Die metallorganische Verbindung wird in der Regel als Lösung in einem chemisch indifferenten (inerten) Kohlenwasserstoff zugesetzt. Die Dosierung richtet sich nach dem angestrebten Molekulargewicht des Polymeren, liegt aber in der Regel im Bereich von 0,002 bis 5 Mol-%, wenn man sie auf die Monomeren bezieht.

Zur Erzielung höherer Polymerisationsgeschwindigkeiten können geringe Mengen polarer, aprotischer Lösungsmittel zugesetzt werden. Geeignet sind beispielsweise Diethylether, Diisopropylether, Diethylenglykoldimethylether, Diethylenglykol-dibutylether oder insbesondere Tetrahydrofuran. Das polare Cosolvens wird dem unpolaren Lösungsmittel bei dieser Verfahrensvariante in der Regel in einer geringen Menge von ca. 0,5 - 5 Vol-% zugesetzt. Besonders bevorzugt ist THF in einer Menge von 0,1 - 0,3 Vol-%. In reinem THF werden die Reaktionsparameter ungünstig beeinflußt, so daß das Polymere hohe Restanteile an Monomeren der Formel I enthält.

Die Polymerisationstemperatur kann zwischen 0° und 130°C liegen. Bevorzugt sind Temperaturen von 50° - 90°C. Im allgemeinen wird unter isothermen Bedingungen, d.h. unter Konstanthaltung der Polymerisationstemperatur polymerisiert. Man kann die Temperatur aber auch in dem Bereich von 0° - 130°C, vorzugsweise von 30° - 120°C ansteigen lassen. Besonders zweckmäßig ist es, zunächst isotherm zu polymerisieren und gegen Ende der Polymerisation, d.h. bei geringen Monomerkonzentrationen die Temperatur adiabatisch ansteigen zu lassen, um die Polymerisationszeiten kurz zu halten.

Die Reaktionszeiten liegen in der Regel im Bereich von 0,1 bis 24, vorzugsweise von 0,5 bis 12 und besonders bevorzugt von 1 bis 10 h.

Als Komponente B) enthalten die erfindungsgemäßen thermoplastischen Formmassen 0 bis 3000, vorzugsweise 0 bis 2000 und besonders bevorzugt 100 bis 1000 ppm an Monomeren der Formel I. Vorzugsweise handelt es sich dabei um Monomere der gleichen Formel wie die bei der Polymerisation in das Copolymer eingebauten Monomeren.

Als Komponente C) enthalten die erfindungsgemäßen thermoplastischen Formmassen 0 bis 500, vorzugsweise 0 bis 200 und insbesondere 20 bis 100 ppm an Monomeren der Formel II. Bevorzugt sind dies Monomere der gleichen chemischen Formel, wie sie bei der Herstellung der Komponente A) eingesetzt wurden.

Die Mengenangaben der Komponente B) und C) beziehen sich auf das Gewicht der Komponente A in den thermoplastischen Formmassen.

Als Komponente D) können die erfindungsgemäßen thermoplastischen Formmassen 0 bis 90, vorzugsweise bis zu 60 und insbesondere bis zu 30 Gew.-%, bezogen auf das Gesamtgewicht der Formmasse, an weiteren, vom Copolymer A) verschiedenen Komponenten enthalten. Grundsätzlich besteht hinsichtlich der Struktur dieser weiteren polymeren Komponenten keine besondere Beschränkung; bevorzugt werden jedoch Polymere, die zumindest einen gewissen Grad an Verträglichkeit mit der Komponente A) aufweisen, da anderenfalls die mechanischen Eigenschaften in der Regel nicht zufriedenstellend sind. Bevorzugte Polymere sind Styrolpolymere wie schlagfestes oder glasklares Polystyrol oder auch Polyphenylenether-Polymerisate, ggf. in Abmischung mit Styrolpolymeren.

Weiterhin können die erfindungsgemäßen thermoplastischen Formmassen als Komponente E) noch bis zu 50 Gew.%, bezogen auf das Gesamtgewicht der thermoplastischen Formmasse an weiteren Zusatzstoffen und Verärbeitungshilfsmitteln enthalten. Derartige Additive sind dem Fachmann bekannt und in der Literatur beschrieben, so daß sich hier detaillierte Angaben erübrigen. Beispielhaft seien faser- und teilchenförmige Füllstoffe, Stabilisatoren gegen Wärme und UV-Licht, Entformungsmittel und Gleitmittel erwähnt. Auch eine Pigmentierung der erfindungsgemäßen Formmassen ist selbstverständlich möglich.

Gemäß einer weiteren Ausführungsform der vorliegenden Erfindung werden Blockcopolymerisate mit Blöcken A und B der allgemeinen Strukturen (A-B)ₙ, A-B-A, B-A-B_{,} X[(A-B)ₙ]ₘ, X[(B-A)ₙ]ₘ, X(A-B-A)ₘ und X(B-A-B)ₘ zur Verfügung gestellt, wobei A für einen Block eines Copolymeren aus Monomeren der allgemeinen Formel I und II, B für einen Block aus Polymeren der allgemeinen Formel II, X für den Rest eines m- funktionellen Kopplungsmittels, n für eine ganze Zahl im Bereich von 1 bis 5 und m für eine ganze Zahl im Bereich von 2 bis 20 stehen.

Das Kopplungsmittel X reagiert nach der Polymerisation mit den lebenden anionischen Kettenenden, wodurch die vorstehend beschriebenen Strukturen entstehen. Beispiele für geeignete Kopplungsmittel sind in den US 3 985 830, 3 280 084, 3 637 554 und 4 091 053 zu finden. Nur beispielhaft seien hier epoxidierte Glyceride wie epoxidiertes Leinsamenöl oder Sojaöl genannt; geeignet ist auch Divinylbenzol. Befindet sich das lebende anionische Ende auf der Seite des B-Blocks, dann wird bevorzugt mit Verbindungen gekoppelt, die Epoxi- und/oder Estergruppen enthalten; bildet jedoch der A-Block das aktive Ende, wird bevorzugt Divinylbenzol zur Kopplung eingesetzt.

Die Blockübergänge können sowohl scharf getrennt wie auch "verschmiert" sein.

Unter "verschmiertem" Übergang versteht man ein Kettenstück des Moleküls, in dem die Monomeren des Blocks A mit dem Monomeren des Block B statistisch verteilt sind. Das angestrebte Molekulargewicht der Blöcke wird über das Verhältnis von Initiator zu Monomer eingestellt.

Die genannten Blockcopolymeren mit einem Polymerblock aus Monomeren der allgemeinen Formel II ergeben in Abmischung mit glasklarem oder schlagzähen Polystyrol Polymermischungen mit erhöhtem Erweichungspunkt und guten mechanischen Eigenschaften.

Darüber hinaus lassen sich die erfindungsgemäßen Blockcopolymerisate als solche verwenden. Sie sind besonders geeignet für Anwendungen, die dem Lebensmittelrecht unterliegen, da sie extrem niedrige Werte an Restmonomeren aufweisen, die vorteilhafterweise unter 3000 ppm, insbesondere unter 2000 ppm für Monomere der Formel I und unter 500 ppm, vorzugsweise unter 200 ppm für Monomere der Formel II liegen.

### Beispiele

### Reinigung von 1,1-Diphenylethylen (DPE)

Rohes DPE (Aldrich bzw. Herstellung durch Umsetzung von Phenylmagnesiumbromid mit Acetophenon, Acetylierung mit Essigsäureanhydrid und thermischer Eliminierung von Essigsäure) wird über eine Kolonne mit mindestens 50 theoretischen Böden (Drehbandkolonne; für größere Mengen Kolonne mit Sulzer-Packungen) auf 99,8 % Reinheit aufdestilliert. Das meist schwach gelbe Destillat wird über eine 20 cm-Alox-Säule (Woelm-Alumina für die Chromatographie, wasserfrei) filtriert, mit 1,5 n sec-Butyllithium bis zur kräftigen Rotfärbung titriert und über eine einfache 4 Brücke im Vakuum (1 mbar) abdestilliert. Das so erhaltene Produkt ist vollkommen farblos und kann direkt in die anionische Polymerisation eingesetzt werden.

### Polymerisation

Lösungen mit lebenden Anionen wurden grundsätzlich unter Reinststickstoff gehandhabt. Die Lösungsmittel wurden über wasserfreiem Aluminiumoxid getrocknet.

In den folgenden Beispielen steht S für Styrol und DPE für 1,1-Diphenylethylen und die Angaben in % beziehen sich auf das Gewicht, soweit nicht anders angegeben.

### Beispiel 1

### Herstellung eines statistischen S/DPE-Copolymeren mit einem S-DPE-Molverhältnis von 2:1; simultaner Zulauf von S, DPE und Cyclohexan

Ein 21-Glasreaktor mit Doppelmantel für Kühlung und Heizung und Ankerrührer wurde über mehrere Stunden mit einer refluxierenden Lösung von DPE/sec-Butyllithium in Cyclohexan inertisiert. Nach Ablassen der Reinigungslösung wurden 100 ml Cyclohexan, 100 ml eines Gemisches aus 264,24 ml (270,38 g, 1,5 mol) DPE und 344,37 ml (312,45 g, 3,0 mol) Styrol sowie 9,71 ml einer 0,5 m sec-Butyllithium-Lösung in Cyclohexan bei 25°C vorgelegt. Die Mischung färbte sich sofort rot. Der Reaktorinhalt wurde über den Heizmantel auf 70°C thermostatisiert, wobei die Farbtiefe beim Erwärmen der Lösung stark zunahm. Die verbleibenden 508,6 ml des S-DPE-Gemisches wurden über eine Spritzenpumpe innerhalb von 40 min mit konstanter Geschwindigkeit zudosiert. Parallel wurden im gleichen Zeitraum 500 ml Cyclohexan zugefahren.

7 min nach Zulaufende wurden weitere 249 ml Cyclohexan zugegeben (Polymerkonzentration 50 %). Während der Polymerisation war ein deutlicher Anstieg der Viskosität zu beobachten. Nach weiteren 15 min Nachreaktionszeit wurde mit Ethanol bis zur Farblosigkeit titriert, das Polymer durch Eintropfen der Polymerlösung in Ethanol gefällt und das abfiltrierte und mehrmals mit siedendem Ethanol gewaschene weiße Pulver 2 h bei 180°C im Vakuum (1 mbar) getrocknet.

Ausbeute: 580 g (99,5 %); flüchtige Anteile: 0,3 %; Styrolgehalt (FTIR): 54,5 % (53,6 % theor.); DPE-Gehalt (FTIR): 45,1 % (46,4 % theor.) Gehalt an monomerem DPE (Komponente B) 2180 ppm, Gehalt an Styrol (Komponente C) 384 ppm; Tg (DSC): 155°C; Breite der Glasstufe: 9°C; Molmassen (GPC, Polystyrol-Eichung, g/mol): Mn 105 000, Mw 126 000, M(Peakmaximum) 119 000.

### Beispiel 2

### Herstellung eines statistischen S/DPE-Copolymeren mit einem S-DPE-Molverhältnis von 2:1; Vorlage von DPE und Cyclohexan und Zulauf von S

Der wie in Beispiel 1 vorbereitete Reaktor wurde bei 25°C mit 749 ml Cyclohexan, 264,24 ml (270,38 g, 1,5 mol) DPE und 9,71 ml einer 0,5 m sec-Butyllithium-Lösung beschickt und auf 70°C thermostatisiert. Die ersten 300 ml Styrol wurden innerhalb von 5 min zudosiert, weitere 20 ml innerhalb von 10 min und die restlichen 24,37 ml Styrol in 15 min. Nach 15 min Nachreaktionszeit wurde wie in Beispiel 1 beschrieben aufgearbeitet.

Ausbeute: 582 g (99,8 %); flüchtige Anteile: 0,1%; Styrolgehalt (FTIR): 54,1 % (53,6 % theor.); DPE-Gehalt (FTIR): 45,5 % (46,4 % theor.) DPE-Monomer (Komponente B): 350 ppm; Styrol-Monomer (Komponente C): 25 ppm; Tg (DSC): 156°C; Breite der Glasstufe: 12°C; Molmassen (GPC; Polystyrol-Eichung, g/mol): Mn 107 000, Mw 128 000, M(Peakmaximum) 120 000.

### Beispiel 3

### Herstellung eines statistischen S/DPE-Copolymeren mit einem S-DPE-Molverhältnis von 1,1:1; Vorlage von DPE und Zulauf von S und Cyclohexan

Der wie in Beispiel 1 vorbereitete Reaktor wurde bei 25°C mit 264,24 ml (270,38 g, 1,5 mol) DPE und 7,37 ml einer 0,5 m sec-Butyllithium-Lösung beschickt und auf 70°C thermostatisiert. 189,4 ml (171,85 g, 1,65 mol) Styrol wurden mit 810,6 ml Cyclohexan vorgemischt. Mit einer Spritzenpumpe wurde die Mischung innerhalb von 180 min zudosiert, wobei die Zulaufgeschwindigkeit in einem Gradientenverfahren verkleinert wurde. Die Dosierungen waren:

| | |
|---|---|
| 0 - 30 min | 507,94 ml; |
| 30 - 60 min | 253, 97 ml; |
| 60 - 90 min | 126,98 ml; |
| 90 - 120 min | 63,49 ml; |
| 120 - 150 min | 31,75 ml; |
| 150 - 180 min | 15,87 ml. |

Nach 15 min Nachreaktionszeit wurde wie in Beispiel 1 beschrieben aufgearbeitet.

Ausbeute: 441 g (99,7 %); flüchtige Anteile: 0,1%; Styrolgehalt (FTIR): 39,2 % (38,9 % theor.); DPE-Gehalt (FTIR): 60,9 % (61,1 % theor.) DPE-Monomer (Komponente B): 560 ppm; Styrol Monomer (Komponente C): 12 ppm; Tg (DSC): 173°C; Breite der Glasstufe: 130C; Molmassen (GPC, Polystyrol-Eichung, g/mol): Mn 104 000, Mw 124 000, M(Peakmaximum) 116 000.

### Beispiel 4

### Herstellung eines S/DPE-S-Zweiblockcopolymeren mit einem S-DPE-Molverhältnis des S/DPE-Blocks von 1,1:1

Der wie in Beispiel 1 vorbereitete Reaktor wurde bei 25°C mit 264,24 ml (270,38 g, 1,5 mol) DPE und 14,74 ml einer 0,5 m sec-Butyllithium-Lösung beschickt und auf 70°C thermostatisiert. 189,4 ml (171,85 g, 1,65 mol) Styrol wurden mit 810,6 ml Cyclohexan vorgemischt. Mit einer Spritzenpumpe wurde die Mischung innerhalb von 90 min zudosiert, wobei Zulaufgeschwindigkeit in Form eines Gradienten wie in Beispiel 3 beschrieben, verkleinert wurde.

Nach 15 min Nachreaktionszeit wurden innerhalb von 15 min 442,2 g Styrol und 400 ml Cyclohexan zudosiert und nach weiteren 15 min wie in Beispiel 1 beschrieben aufgearbeitet.

Ausbeute: 884 g (99,9 %) flüchtige Anteile: 0,05 %; Styrolgehalt (FTIR): 69,4 % (69,4 % theor.); DPE-Gehalt (FTIR): 30,5 % (30,6 % theor.) DPE-Monomer (Komponente B): 72 ppm; Styrol-Monomer 7 ppm; Tg (DSC, zwei gleichhohe Glasstufen): 171°C; Breite der Glasstufe: 15°C; 105°C; Breite der Glasstufe:16°C. Molmassen (GPC, Polystyrol-Eichung, g/mol): Mn 115 000, Mw 123 000, M(Peakmaximum) 119000.

### Beispiel 5

### Herstellung eines S/DPE-S-S/DPE-Dreiblockcopolymeren mit einem S-DPE-Molverhältnis der S/DPE-Blöcke von 1,1:1 und Kupplung mit Ethylformiat

Der wie in Beispiel 1 vorbereitete Reaktor wurde bei 25°C mit 264,24 ml (270,38 g, 1,5 mol) DPE und 29,48 ml einer 0,5 m sec-Butyllithium-Lösung beschickt und auf 70°C thermostatisiert. 189,4 ml (171,85 g, 1,65 mol) Styrol wurden mit 810,6 ml Cyclohexan vorgemischt. Mit einer Spritzenpumpe wurde die Mischung innerhalb von 60 min zudosiert, wobei die Zulaufgeschwindigkeit in Form eines Gradienten wie in Beispiel 3 beschrieben, verkleinert wurde. Nach 10 min Nachreaktionszeit wurden innerhalb von 15 min 442,2 g Styrol und 400 ml Cyclohexan zudosiert. Nach weiteren 15 min wurden 546 mg Ethylformiat in 2 ml Cyclohexan tropfenweise bis zur völligen Entfärbung zugegeben. Das Polymer wurde wie in Beispiel 1 beschrieben aufgearbeitet.

Ausbeute: 884 g (99,9 %); flüchtige Anteile: 0,05 %; Styrolgehalt (FTIR): 69,4 % (69,4 % theor.); DPE-Gehalt (FTIR): 30,5 % (30,6 % theor.) DPE-Monomer (Komponente B): 381 ppm; Styrol-Monomer (Komponente C): 5 ppm; Tg (DSC, zwei gleichhohe Glasstufen): 169°C; Breite der Glasstufe: 17°C; 106°C; Breite der Glasstufe: 18°C. Molmassen (GPC, Polystyrol-Eichung, g/mol): Hauptpeak M(Peakmaximum) 121 000, 72 % Fläche; Nebenpeak M(Maximum) 60 000, 28 % Fläche.

### Beispiel 6

### Herstellung eines statistischen S/DPE-Copolymeren mit einem S-DPE-Molverhältnis von 1,1:1; Vorlage von DPE und Zulauf von S und Tetrahydrofuran (THF)

Der wie in Beispiel 1 vorbereitete Reaktor wurde bei 25°C mit 264,24 ml (270,38 g, 1,5 mol) DPE und 7,37 ml einer 0,5 m sec-Butyllithium-Lösung beschickt und auf 70°C thermostatisiert. 189,4 ml (171,85 g, 1,65 mol) Styrol wurden mit 810,6 ml THF vorgemischt. Mit einer Spritzenpumpe wurde die Mischung innerhalb von 180 min zudosiert, wobei die Zulaufgeschwindigkeit in Form eines Gradienten wie in Beispiel 3 beschrieben, verkleinert wurde.

Nach 15 min Nachreaktionszeit wurde wie in Beispiel 1 beschrieben aufgearbeitet.

Ausbeute: 403 g (91,2 %); flüchtige Anteile: 3,7 %; Styrolgehalt (FTIR): 42,6 % (38,9 % theor.); DPE-Gehalt (FTIR): 57,3 % (61,1 % theor.); Tg (DSC): 159°C; Breite der Glasstufe: 17°C; Molmassen (GPC, Polystyrol-Eichung, g/mol): Mn 87 000, Mw 111 000, M(Peak-maximum) 108 000.

### Beispiel 7

### Herstellung eines statistischen S/1,1-Di(3,4-dimethylphenyl)ethylen-Copolymeren mit einem S-Di(3,4-dimethylphenyl)ethylen-Molverhältnis von 1,1:1; Vorlage von Di(3,4-dimethylphenyl)ethylen und Zulauf von S und Cyclohexan

Der wie in Beispiel 1 vorbereitete Reaktor wurde bei 25°C mit 355,5 g (1,5 mol) frisch aufgeschmolzenem 1,1-Di(3,4-dimethylphenyl)ethylen und 8,79 ml einer 0,5 m sec-Butyllithium-Lösung beschickt und auf 70°C thermostatisiert. 189,4 ml (171,85 g, 1,65 mol) Styrol wurden mit 810,6 ml Cyclohexan vorgemischt. Mit einer Spritzenpumpe wurde die Mischung innerhalb von 180 min zudosiert, wobei die Zulaufgeschwindigkeit in Form eines Gradienten wie in Beispiel 3 beschrieben, verkleinert wurde.

Nach 15 min Nachreaktionszeit wurde wie in Beispiel 1 beschrieben aufgearbeitet.

Ausbeute: 525 g (99,5 %); flüchtige Anteile: 0,2%; Styrolgehalt (FTIR): 32,7 % (32,6 % theor.) DPE-Monomer (Komponente B): 65 ppm; Styrol-Monomer (Komponente C): 9 ppm; Tg (DSC): 1750C; Breite der Glasstufe: 14°C; Molmassen (GPC, Polystyrol-Eichung, g/mol): Mn 36 000, Mw 90 000, M(Peakmaximum) 89 000.

## Patentansprüche

1. Thermoplastische Formmassen, enthaltend als wesentliche Komponenten
A) 10 bis 100 Gew.% statistische Copolymerisate aus den Monomeren der allgemeinen Formeln I und II 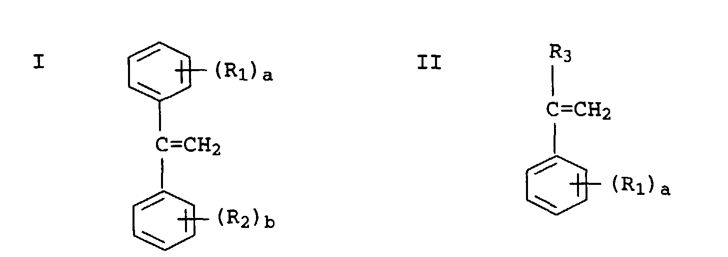 mit
R₁ = H oder Alkylrest mit 1-22 C-Atomen
R₂ = H oder Alkylrest mit 1-22 C-Atomen
R₃ = H oder Alkylrest mit 1-4 C-Atomen
a = 0, 1, 2, 3, 4 oder 5
b = 0, 1, 2, 3, 4 oder 5
B) 0 bis 3000 ppm, bezogen auf das Gewicht der Komponente A, Verbindungen der allgemeinen Formel I,
C) 0 bis 500 ppm, bezogen auf das Gewicht der Komponente A, Verbindungen der allgemeinen Formel II,
D) 0 bis 90 Gew.%, bezogen auf das Gesamtgewicht der Formmasse, weiteren von A) verschiedenen Polymeren, und
E) 0 bis 50 Gew.%, bezogen auf das Gesamtgewicht der Formmasse, an weiteren Zusatzstoffen und Verarbeitungshilfsmitteln.

2. Thermoplastische Formmassen nach Anspruch 1, dadurch gekennzeichnet, daß der Gehalt der Komponente B) im Bereich von 0 - 1000 ppm, bezogen auf das Gesamtgewicht der Komponente A), liegt.

3. Thermoplastische Formmassen nach einem der Ansprüche 1 bis 2, dadurch gekennzeichnet, daß der Gehalt der Komponente B) im Bereich von 0 bis 100 ppm, bezogen auf das Gesamtgewicht der Komponente A), liegt.

4. Thermoplastische Formmassen nach einem der Ansprüche 1 bis 3, enthaltend als Komponente A ein Copolymer aus 1,1,-Diphenylethylen und Styrol.

5. Verfahren zur Herstellung von thermoplastischen Formmassen nach einem der Ansprüche 1 bis 4 durch anionische Polymerisation , dadurch gekennzeichnet, daß man die Monomeren der Formel I vorlegt und die Monomeren der Formel II während der Reaktion nach einem Gradientenverfahren derart zudosiert, daß mit zunehmender Reaktionsdauer die zugegebene Menge an Monomeren II pro Zeiteinheit im wesentlichen entsprechend der noch vorhandenen Menge an Monomeren I verringert wird.

6. Verfahren nach Anspruch 5, dadurch gekennzeichnet, daß während der Reaktion kontinuierlich der Brechungsindex der Reaktionsmischung bestimmt wird und das Monomere II in Abhängigkeit von der Änderung des Brechungsindex nach einem Gradientenverfahren zugegeben wird.

7. Blockcopolymerisate mit den Blöcken A und B der folgenden allgemeinen Struktur
(A - B)ₙ
A - B - A
B - A - B
X [(A - B)ₙ]ₘ, X [(B - A)ₙ]ₘ, X [(A - B - A)ₙ]ₘ oder
X [(B - A - B)ₙ]ₘ
wobei
A für einen Block aus Copolymeren aus Monomeren der allgemeinen Formeln I und II,
B für einen Block aus Monomeren der allgemeinen Formel II,
X für den Rest eines m-funktionellen Kopplungsmittels,
n für einen ganze Zahl im Bereich von 1 bis 5 und
m für eine ganze Zahl im Bereich von 2 bis 20
stehen.

8. Verwendung von Blockcopolymeren gemäß Anspruch 7 zur Herstellung von Polymermischungen mit Styrolpolymeren.

9. Thermoplastische Formmassen , enthaltend als wesentliche Komponenten ein Blockcopolymer gemäß Anspruch 7, 0 - 3000 ppm an Monomeren der allgemeinen Formel I und 0 - 500 ppm an Monomeren der allgemeinen Formel II.

10. Verwendung von thermoplastischen Formmassen gemäß einem der Ansprüche 1 bis 4 oder 9 zur Herstellung von Fasern, Folien und Formkörpern.

## Claims

1. Thermoplastic molding compounds comprising as essential components
A) from 10 to 100 % by weight of random copolymers of the monomers of the general formulae I and II 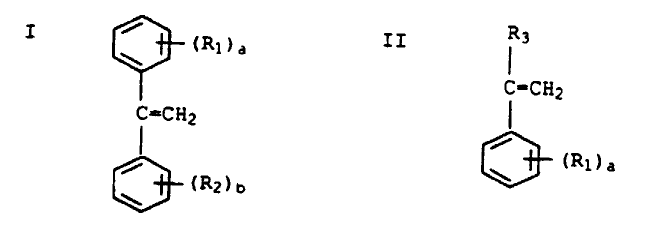 where
R₁ is H or alkyl of 1-22 carbon atoms,
R₂ is H or alkyl of 1-22 carbon atoms,
R₃ is H or alkyl of 1-4 carbon atoms,
a is 0, 1, 2, 3, 4 or 5, and
b is 0, 1, 2, 3, 4 or 5,
B) from 0 to 3000 ppm, based on the weight of component A, of compounds of the general formula I,
C) from 0 to 500 ppm, based on the weight of component A, of compounds of the general formula II,
D) from 0 to 90 % by weight, based on the total weight of the molding compound, of polymers other than A), and
E) from 0 to 50 % by weight, based on the total weight of the molding compound, of additives and processing aids.

2. Thermoplastic molding compounds as claimed in claim 1, comprising from 0 to 1000 ppm of component B), based on the total weight of component A).

3. Thermoplastic molding compounds as claimed in either of claims 1 and 2, comprising from 0 to 100 ppm of component B), based on the total weight of component A).

4. Thermoplastic molding compounds as claimed in any of claims 1 to 3, comprising a copolymer of 1,1-diphenylethylene and styrene as component A.

5. A process for producing thermoplastic molding compounds as claimed in any of claims 1 to 4 by anionic polymerization, which comprises providing the monomers of the formula I as initial charge and metering in the monomers of the formula II during the reaction according to a gradient method such that, as the reaction progresses, the amount of monomer II added per unit time is essentially reduced according to the amount of monomer I still present.

6. A process as claimed in claim 5, wherein the refractive index of the reaction mixture is continuously determined during the reaction and monomer II is added according to a gradient method as a function of the change in the refractive index.

7. Block copolymers with blocks A and B of the following general structure
(A - B)ₙ
A - B - A
B - A - B
X [(A - B)ₙ]ₘ, X [(B - A)ₙ]ₘ, X [(A - B - A)ₙ]ₘ or
X [(B - A - B)ₙ]ₘ
where
A is a block of copolymers of monomers of the general formulae I and II,
B is a block of monomers of the general formula II,
X is the radical of an m-functional coupling agent,
n is an integer from 1 to 5, and
m is an integer from 2 to 20.

8. The use of block copolymers as claimed in claim 7 for producing polymer blends with styrene polymers.

9. Thermoplastic molding compounds comprising as essential components a block copolymer as claimed in claim 7,
0 - 3000 ppm of monomers of the general formula I and
0 - 500 ppm of monomers of the general formula II.

10. The use of thermoplastic molding compounds as claimed in any of claims 1 to 4 or 9 for producing fibers, films and shaped articles.

## Revendications

1. Matières à mouler thermoplastiques contenant, à titre de composants essentiels,
A) à concurrence de 10 à 100% en poids, des copolymères statistiques constitués par les monomères répondant aux formules générales I et II 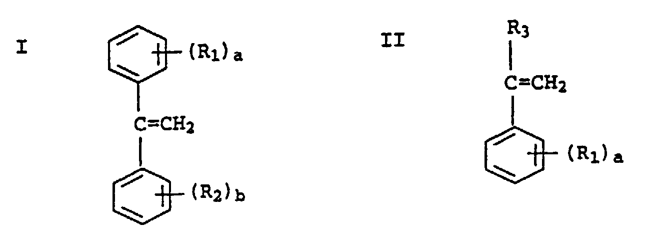 dans lesquelles
R₁ représente un atome d'hydrogène ou un radical alkyle contenant de 1 à 22 atomes de carbone,
R₂ représente un atome d'hydrogène ou un radical alkyle contenant de 1 à 22 atomes de carbone,
R₃ représente un atome d'hydrogène ou un radical alkyle contenant de 1 à 4 atomes de carbone,
a = 0, 1, 2, 3, 4 ou 5,
b = 0, 1, 2, 3, 4 ou 5,
B) à concurrence de 0 à 3000 ppm, rapportées au poids du composant A, des composés répondant à la formule générale 1,
C) à concurrence de 0 à 500 ppm, rapportées au poids du composant A, des composés répondant à la formule générale II,
D) à concurrence de 0 à 90% en poids, rapportées au poids total de la matière à mouler, d'autres polymères différents de A, et
E) à concurrence de 0 à 50% en poids, rapportées au poids total de la matière à mouler, des additifs et des adjuvants de traitement supplémentaires.

2. Matières à mouler thermoplastiques selon la revendication 1, caractérisées en ce que la teneur en composant B se situe dans le domaine de 0 à 1000 ppm rapportées au poids total du composant A).

3. Matières à mouler thermoplastiques selon l'une quelconque des revendications 1 à 2, caractérisées en ce que la teneur en composant B) se situe dans le domaine de 0 à 100 ppm rapportées au poids total du composant A).

4. Matières à mouler thermoplastiques selon l'une quelconque des revendications 1 à 3, contenant, à titre de composant A, un copolymère constitué par le 1,1-diphényléthylène et par du styrène.

5. Procédé pour la préparation de matières à mouler thermoplastiques selon l'une quelconque des revendications 1 à 4, par polymérisation anionique, caractérisé en ce qu'on dépose au préalable les monomères de formule I et en ce qu'on ajoute de manière dosée les monomères de formule II au cours de la réaction conformément à un procédé à gradients de telle sorte que, au fur et à mesure que la durée de la réaction se prolonge, la quantité ajoutée des monomères II par unité de temps diminue essentiellement en fonction de la quantité encore présente des monomères I.

6. Procédé selon la revendication 5, caractérisé en ce qu'on détermine en continu, au cours de la réaction, l'indice de réfraction du mélange réactionnel et en ce qu'on ajoute le monomère II en fonction de la modification de l'indice de réfraction conformément à un procédé à gradients.

7. Copolymères séquencés comprenant les séquences A et B possédant les structures générales ci-après:
(A - B)ₙ
A - B - A
B - A - B
X [(A - B)ₙ]ₘ, X [(B - A)ₙ]ₘ, X [(A - B - A)ₙ]ₘ ou
X [(B - A - B)ₙ]ₘ,
dans lesquelles
A représente une séquence constituée par des copolymères de monomères répondant aux formules générales I et II,
B représente une séquence constituée par des monomères répondant à la formule générale II,
X représente un radical d'un agent de couplage m-fonctionnel,
n représente un nombre entier dans le domaine de 1 à 5 et
m représente un nombre entier dans le domaine de 2 à 20.

8. Utilisation de copolymères séquencés selon la revendication 7 pour la préparation de mélanges polymères avec des polymères du styrène.

9. Matières à mouler thermoplastiques contenant, à titre de composants essentiels, un copolymère séquencé selon la revendication 7, à concurrence de 0 à 3000 ppm, des monomères répondant à la formule générale I et, à concurrence de 0 à 500 ppm, des monomères répondant à la formule générale II.

10. Utilisation de matières à mouler thermoplastiques selon l'une quelconque des revendications 1 à 4 ou selon la revendication 9 pour la fabrication de fibres, de feuilles et de corps moulés.
